# EUROPEAN PATENT APPLICATION

(11) **EP 2 871 572 A1**
(43) Date of publication of application: **13.05.2015**
(21) Application number: 14190051.4
(22) Date of filing: 23.10.2014
(51) Int. Cl.: G06F 3/0488, G06F 3/0485

(54) **Contents display method and electronic device implementing the same**

(30) Priority: 06.11.2013 KR 20130133897
(71) Applicant: Samsung Electronics Co., Ltd, Gyeonggi-do 443-742 (KR)
(72) Inventor: Lee, Changho, 443-742 Gyeonggi-do (KR)
(74) Representative: Gover, Richard Paul

(57) **Abstract**

A method for displaying an electronic document in an electronic device is provided. The method for displaying the electronic document in the electronic device having a touch panel installed on a screen includes recognizing, by the electronic device, a main area in the electronic document, adjusting a width of the main area to a width of an application execution screen for displaying the electronic document, and displaying a part of the adjusted main area on the application execution screen.

## Description

### TECHNICAL FIELD

The present disclosure relates to an electronic device which can display a content, for example, an electronic document.

### BACKGROUND

Generally, an electronic device such as a smart phone, a tablet Personal Computer (PC), or the like may display an electronic document (e.g., a web page) on a screen thereof. In this event, an electronic document may be larger than the screen so that only a part of the document can be displayed. The electronic device may display another part of a web page larger than the screen by moving a display area of the web page in response to a user input (e.g., a drag of touch input means (e.g., a finger, a pen, or the like) for a touch screen).

The above information is presented as background information only to assist with an understanding of the present disclosure. No determination has been made, and no assertion is made, as to whether any of the above might be applicable as prior art with regard to the present disclosure.

### SUMMARY

A content may be configured as having a main area and one or more additional areas. For example, a main area of a web page may include an article and an additional area may include an advertisement, or the like. The user may not want a display of the advertisement. That is, the user may perform an input (e.g., dragging, panning, swiping, or the like) which moves a display area of a web page to make only the main area be displayed. However, the display area of the web page may move against a user's intention and thus an advertisement desired not to be displayed, or the like is displayed so that inconvenience can be given to the user.

Aspects of the present disclosure are to address at least the above-mentioned problems and/or disadvantages and to provide at least the advantages described below. Accordingly, an aspect of the present disclosure is to provide a method and an apparatus for providing convenience to a user by displaying a main area in priority over an additional area in contents.

In accordance with an aspect of the present disclosure, a method for displaying an electronic document in an electronic device including a touch panel installed on a screen is provided. The method includes recognizing, by the electronic device, a main area in the electronic document, adjusting a width of the main area to a width of an application execution screen for displaying the electronic document, and displaying a part of the adjusted main area on the application execution screen.

In accordance with another aspect of the present disclosure, a method for displaying an electronic document in an electronic device having a touch panel installed on a screen is provided. The method includes recognizing, by the electronic device, a main area in the electronic document, displaying a part of the main area on the screen, recognizing a movement command of the displayed part through a touch input on the screen, moving the displayed part in response to the recognized movement command, and when a boundary of the main area reaches a boundary of the screen according to the moving of the displayed part, stopping the moving of the displayed part.

In accordance with another aspect of the present disclosure, an electronic device is provided. The electronic device includes a display unit including a touch panel installed on a screen, a controller configured to control an operation of recognizing a main area in an electronic document, to control an operation of adjusting a width of the main area to a width of an application execution screen for displaying the electronic document and to control an operation of controlling the display unit to cause a part of the adjusted main area to be displayed on the application execution screen, and a memory configured to store the electronic document and a software module configured to perform the operation of the recognizing, the operation of the adjusting and the operation of the controlling.

In accordance with another aspect of the present disclosure, an electronic device is provided. The electronic device includes a display unit including a touch panel installed on a screen, a controller configured to control an operation of recognizing a main area in an electronic document, to control an operation of controlling the display unit to cause a part of the main area to be displayed on the screen, to control an operation of recognizing a movement command of the displayed part through a touch input on the screen, to control an operation of moving the displayed part in response to the recognized movement command, and to control an operation of stopping the moving of the displayed part when a boundary of the main area reaches a boundary of the screen according to the moving of the displayed part, and a memory configured to store the electronic document and a software module configured to perform the operation of the recognizing of the main area, the operation of the controlling of the display unit, the operation of the recognizing of the movement command, the operation of the moving of the displayed part and the operation of the stopping.

The present disclosure may provide convenience to the user by displaying the main area in priority over additional areas in contents.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of an electronic device according to an embodiment of the present disclosure;
FIG. 2 is a flow chart illustrating an example of a process of displaying a web page according to an embodiment of the present disclosure;
FIG. 3A is a screen of an electronic device when the process of FIG. 2 has not been executed according to an embodiment of the present disclosure;
FIG. 3B is a screen of an electronic device when the process of FIG. 2 has been executed according to an embodiment of the present disclosure;
FIG. 4A is an embodiment of a vertical movement method configured when the process of FIG. 2 has not been executed according to an embodiment of the present disclosure;
FIG. 4B is an embodiment of a vertical movement method configured when the process of FIG. 2 has been executed according to an embodiment of the present disclosure;
FIG. 5 is a flow chart illustrating an example of a process of displaying a web page according to an embodiment of the present disclosure;
FIG. 6A is a screen of an electronic device when the process of FIG. 5 has been not executed according to an embodiment of the present disclosure;
FIG. 6B is a web page enlarged according to an execution of the process of FIG. 5 according to an embodiment of the present disclosure; and
FIGS. 6C and 6D are screens of an electronic device when the process of FIG. 5 has been executed according to various embodiments of the present disclosure.
Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An electronic device according to the present disclosure has a touch screen and may be a computing device, such as a smart phone, a camera, a tablet PC, a notebook PC, a desktop PC, a media player (for example, MP3 player), a Personal Digital Assistance (PDA), a terminal for a game, a wearable computer (for example, watch or glasses) or the like. Further, the electronic device according to the present disclosure may be a home appliance (for example, refrigerator, TV, washing machine or the like) equipped with the computing device therein.

According to an embodiment among various embodiments of the present disclosure, an electronic device may recognize a main area in a content and display a part of a main area on an application execution screen by adjusting a width of the main area to a width of the application execution screen. Herein, the content (e.g., web page) may be divided into a plurality of areas. For example, the content may be divided according to a separator (e.g., separation symbol, frame, or the like), a kind (e.g., image, text, or the like) of contents included in a corresponding content, a tag tagged in a corresponding content, or the like. The application execution screen may be a whole screen of a corresponding electronic device or a partial area on the screen. Recognition of the main area may use various well-known technologies. For example, it is assumed that there are a first content where a size of a character in a content is 10, a second content where a size of a character in a content is 11, and a third content where a size of a character in a content is 12. The electronic device examines an amount (e.g., bytes) of each content. As a result of the examination, when an amount of the first content is largest, an area including the first content may be recognized as a main area. In addition, a recognition method used in an RSS reader may be applied to the electronic device of the present disclosure. The electronic device may enlarge a corresponding content in order that the width of the main area is equal to the width of the application execution screen. On the contrary, the corresponding content may be reduced. The electronic device may vertically move contents in response to a user input (e.g., an up/down drag of a touch input means (e.g., a finger, a pen, or the like) for a touch screen) so as to display another part of the main area on the application execution screen. The electronic device may change a condition (e.g., threshold value) of a vertical movement and utilize the changed condition during a vertical movement of the content. For example, when the width of the main area is equal to the width of the application execution screen, the condition of the vertical movement may be changed (e.g., changed to a threshold value larger than the pre-configured value) to a condition different from a pre-configured condition. Therefore, the user can vertically move more easily the content so as to display only the main area. The condition changing method will be described in more detail with reference to drawings below.

According to another embodiment among various embodiments, an electronic device may recognize a main area in a content and display a part of the main area on an application execution screen. The electronic device may fully display a part of the main area on the application execution screen by enlarging the main area. The electronic device moves the content in response to a user input so as to display another part of the main area, which is not displayed on the application execution screen, on the application execution screen. In this event, when a boundary of the main area reaches a boundary of the application execution screen according to a movement of the content, the electronic device may stop the movement of the content even though there is another area beside the main area. Accordingly, the user can make only the main area display on the application execution screen. Of course, when the movement of the content stops and then the user input occurs again, the electronic device may move the content and display another area other than the main area.

Hereinafter, an embodiment of the present disclosure will be described in detail with reference to the accompanying drawings. In describing the embodiments, descriptions of technologies which are already known to those skilled in the art and are not directly related to the present disclosure may be omitted. Further, detailed descriptions of components having substantially the same configuration and function may be omitted. In the drawings, some components may be exaggerated, omitted, or schematically illustrated.

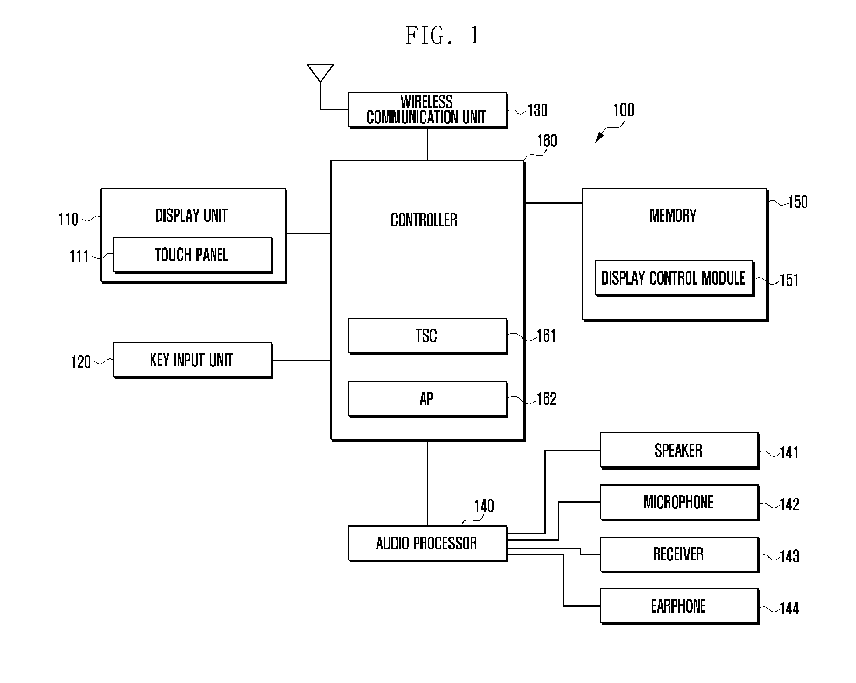

FIGS. 1 through 6D, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 is a block diagram illustrating a configuration of an electronic device according to an embodiment of the present disclosure.

Referring to FIG. 1, an electronic device 100 is illustrated, where the electronic device 100 may include a display unit 110, a key input unit 120, a wireless communication unit 130, an audio processor 140, a speaker 141, a microphone 142, a receiver 143, earphones 144, a memory 150, and a controller 160.

The display unit 110 may display various pieces of information on a screen under a control of the controller 160, particularly, under the control of an Application Processor (AP) 162 of the controller 160. For example, the controller 160 may process a web page (e.g., enlargement, reduction, or the like) and store the web page in the memory (e.g., frame buffer). The display unit 110 may convert a part of a main area in the web page stored in the frame buffer into an analog signal and display a part of the main area on a screen.

The display unit 110 may be implemented by a Liquid Crystal Display (LCD), an Active Matrix Organic Light Emitted Diode (AMOLED), a flexible display, or a transparent display.

When a power is supplied to the display unit 110, the display unit 110 may display a lock image on the screen. When a user input (for example, password) for releasing the lock has been detected in a state where the lock image is displayed, the controller 160 may release the lock. When the lock is released, the display unit 110 may display, for example, a home image instead of the lock image on the screen under a control of the controller 160. The home image may include a background and icons displayed on the background. The icons may indicate applications, contents (for example, picture file, video file, recording file, document, message and the like) or the like. When a user input for executing an application icon has been detected, the controller 160 may execute the corresponding application and control the display unit 110 to display the window on the screen. Meanwhile, the screen may be referred to as a name related to a target to be displayed. For example, the screen displaying the lock image, the screen displaying the home image, and the screen displaying an execution image (that is, window) of the application may be referred to as a lock screen, a home screen, and an execution screen, respectively. An image showing a status (for example, whether an alarm is set, whether WiFi is connected, whether a specific mobile communications protocol is connected, a residual amount of a battery and the like) of the electronic device 100 may be referred to as a status screen. Especially, an application execution screen displaying contents such as a web page, an e-book page, an electronic document, an electronic mail, or the like may be referred to as a content screen.

A touch panel 111 is installed in the screen of the display unit 110. That is, the display unit 110 may include the touch panel 111 as an input unit. For example, the touch panel 111 is implemented with an add-on type touch panel which is placed on the screen of the display unit 110, or an on-cell type or in-cell type touch panel which is inserted in the display unit 110.

The touch panel 111 may include a capacitive hand touch panel. The hand touch panel may include a plurality of scan input ports (hereinafter, a scan port) and a plurality of detection output ports (hereinafter, a detection port). The hand touch panel may generate detection information (for example, an amount of a change in capacitance) in response to a touch of a conductive object (for example, finger) by a scan control signal of a touch screen controller of the controller 160 input into the scan port and transmit the generated detection information to the touch screen controller through the detection port.

The touch panel 111 may include a pen touch panel, that is, a digitizer sensor substrate. The pen touch panel may be configured as an Electro-Magnetic Resonance (EMR). Accordingly, the pen touch panel may generate detection information in response to an indirect touch (e.g., a hovering) or touch of a specially produced pen for formation of a magnetic field and transmit the generated detection information to the touch screen controller of the controller 160. The pen touch panel may include a button. For example, when a user has pressed the button, a magnetic field generated in a coil of the pen may be changed. The pen touch panel may generate detection information in response to a change of the magnetic field and transmit the detection information to a touch screen controller of the controller 160.

The key input unit 120 may be performed while including at least one capacitive touch key. The touch key may generate a key event in response to a touch of an electronic conductor and transmit the key event to the controller 160. The key input unit 120 may further include a key in a different type from the touch type. For example, the key input unit 120 may be performed while including at least one dome key. When the user has pressed the dome key, the dome key is transformed to be in contact with a printed circuit board, and accordingly, a key event may be generated on the printed circuit board and transmitted to the controller 160. Meanwhile, keys of the key input unit 120 may be referred to as hard keys, and keys displayed on the display unit 110 may be referred to as soft keys.

The wireless communication unit 130 may perform a voice call, a video call, or data communication with an external device through a network under a control of the controller 160. For example, the wireless communication unit 130 may access the external device (for example, a server) to download the contents and transmit the contents to the controller 160 under the control of the controller 160. Then, the controller 160 may store the downloaded contents in the memory. Further, the controller 160 may recognize a main area in stored contents and control the display unit 110 to display the main area to a content screen. Meanwhile, the wireless communication unit 130 may include a mobile communication module for example, a Third-Generation (3G) mobile communication module, a 3.5-Generation (3.5G) mobile communication module, a Fourth-Generation (4G) mobile communication module, or the like, a digital broadcasting module, for example, a Digital Multimedia Broadcasting (DMB) module, and a short-range communication module, for example, a WiFi module, a Bluetooth module or a Near Field Communication (NFC) module.

The audio processor 140 is combined with the speaker 141, the microphone 142, the receiver 143, and the earphones 144 so as to perform an input and an output of an audio signal (e.g., voice data) for voice recognition, a voice recording, a voice modulation, a digital recording and a call. The audio processor 140 receives an audio signal (e.g., voice data) from the controller 160, D/A converts and amplifies the received audio signal into an analog signal, and then outputs the converted and amplified audio signal to the speaker 141, the receiver 143, or the earphones 144. The earphones 144 can connect to and separate from the electronic device 100 through an earjack. When the earphones 144 are connected to the audio processor 140, the audio processor 140 may output the audio signal to the earphones 144. When a call mode is a speaker mode, the audio processor 140 may output an audio signal to the speaker 141. When a call mode is a receiver mode, the audio processor 140 may output an audio signal to the receiver 143. The speaker 141, the receiver 143, and the earphones 144 convert and output an audio signal received from the audio processor 140 into a sound wave. The microphone 142 converts a sound wave transmitted from a human or another sound source to an audio signal. Meanwhile, the earphones 144 may be earphones including a 4 pole earphone, e.g., a microphone. The audio processor 140 A/D converts an audio signal received from a microphone of the microphone 142 or the earphones 144 into a digital signal and then transmits the converted audio signal to the controller 160.

When a boundary of the main area reaches a boundary of the content screen according to a movement of the content, the audio processor 140 may play a related auditory feedback (e.g., voice data or sound data), under the control of the controller 160. In addition, when another area is displayed on the content screen, the audio processor 140 may play a related feedback under the control of the controller 160.

The memory 150 may store data generated according to an operation of the electronic device 100 or received from an external device through the wireless communication unit 130, under the control of the controller 160. The memory 150 may include a buffer as a temporary data storage. The memory 150 may store various pieces of setting information (for example, screen brightness, whether to generate a vibration when a touch is generated, whether to automatically rotate a screen, conditions of a vertical movement, or the like) for setting a use environment of the electronic device 100. Accordingly, the controller 160 may operate the electronic device 100 with reference to the setting information. For example, when a movement of the touch input means for the touch screen has been detected, the controller 160 may determine whether a moving trace meets a condition of a pre-configured vertical movement. When a moving trace does not meet a condition of a pre-configured vertical movement, the controller 160 may diagonally move contents in response to a movement of the touch input means. When the moving trace meets the condition of a pre-configured vertical movement, the controller 160 may vertically move contents in response to a movement of the touch input means. The controller 160 may change the condition of the vertical movement. For example, when a width of the main area has been displayed according to a width of the content screen, the controller 160 may change the condition of the vertical movement.

The memory 150 may store various programs for the operation of the electronic device 100, for example, a booting program, one or more operation systems, and applications. Further, the memory 150 may store a display control module 151.

The display control module 151 may be a program configured to cause the controller 160 (e.g., application processor) to perform an operation of recognizing a main area in contents and an operation of displaying a main area in a content screen. The display control module 151 may be an application or a part configuration of the operation system.

Specifically, according to one embodiment among various embodiments of the present disclosure, the display control module 151 may be configured to perform an operation of displaying a part of the main area on the content screen according to a width of the content screen and an operation of displaying another part of the main area on the content screen by vertically moving the contents in response to a user input. Further, when the width of the main area has been displayed according to the width of the content screen, the display control module 151 may be configured to perform an operation of determining a movement direction of the contents in a vertical direction or diagonal direction and an operation of moving the contents in a determined direction.

According to another embodiment among various embodiments of the present disclosure, the display control module 151 may be configured to perform an operation of displaying a part of the main area on the content screen by enlarging the contents and an operation of stopping a movement of the content even though there is another area beside a boundary of the main area when the boundary of the main area reaches the boundary of the content screen according to a movement of the contents.

The memory 150 may include a main memory (not illustrated) and a secondary memory (not illustrated). The main memory may be implemented by, for example, a Random Access Memory (RAM) or the like. The secondary memory may be implemented by a disc, a RAM, a Read Only Memory (ROM), a flash memory, or the like. The main memory may store various programs loaded from the secondary memory, for example, a booting program, an operating system, and applications. When a power of a battery has been supplied to the controller 160, a booting program may be firstly loaded to a main memory. The booting program may load the operating system to the main memory. The operating system may load an application to the main memory. The controller 160 (for example, the AP 162) may access the main memory to decode a command (routine) of the program and execute a function according to a decoding result. That is, the various programs may be loaded to the main memory and run as processes.

The controller 160 controls general operations of the electronic device 100 and a signal flow between internal components of the electronic device 100, performs a function of processing data, and controls power supply to the components from the battery. The controller 160 may include a touch screen controller (TSC) 161 and the AP 162.

The touch screen controller 161 may receive detection information from the touch screen panel 111, analyze the received detection information, and recognize generation of a touch, a hovering, or pressing of a pen. The touch screen controller 161 may determine a hovering area on the touch screen in response to the hovering and calculate hovering coordinates (x_hovering and y_hovering) in the hovering area. The touch screen controller 161 may transmit a hovering event including the calculated hovering coordinates to the AP 162. Further, the hovering event may include a depth value. For example, the hovering event may include a three dimensional coordinate (x, y, and z). Here, a z value may refer to a depth. The touch screen controller 161 may determine a touch area on the touch screen in response to the touch and calculate touch coordinates (x_touch and y_touch) in the touch area. The touch screen controller 161 may transmit a touch event including the calculated touch coordinates to the AP 162. The touch screen controller 161 may transmit a pen button event to the AP 162 in response to pressing of the pen.

The AP 162 may receive a touch screen event (for example, hovering event, touch event, pen button event or the like) from the touch screen controller 161 and perform a function corresponding to the touch screen event.

When the hovering coordinate has been received from the touch screen controller 161, the AP 162 may determine that a touch input device hovers on the touch screen. When the hovering coordinate has been not received from the touch panel 111, the AP 162 may determine that the hovering of the touch input device is released from the touch screen. Further, when a hovering coordinate is changed and a change amount of the hovering coordinate exceeds a preset movement threshold, the AP 162 may determine that a hovering movement of the touch input device is generated. The AP 162 may calculate a position change amount (dx and dy) of the touch input device, a movement speed of the touch input device, and a trace of the hovering movement in response to the hovering movement of the touch input device. In addition, the AP 162 may determine a hovering gesture for the touch screen based on a hovering coordinate, whether to release a hovering of the touch input device, whether to move the touch input device, a position variation of the touch input device, a movement speed of the touch input device, a trace of a hovering movement, or the like. The hovering gesture may include, for example, a drag, a flick, a pinch in, and a pinch out.

When the touch coordinate has been received from the touch screen controller 161, the AP 162 may determine that the touch input device touches the touch panel 111. When the touch coordinate has been not received from the touch panel 111, the AP 162 may determine that the touch of the touch input device is released from the touch screen. Further, when a touch coordinate is changed and a change amount of the touch coordinate exceeds a preset movement threshold, the AP 162 may determine that a touch movement of the touch input device is generated. The AP 162 may calculate a position change amount (dx and dy) of the touch input device, a movement speed of the touch input device, and a trace of the touch movement in response to the touch movement of the touch input device. In addition, the AP 162 may determine a touch gesture for the touch screen based on a touch coordinate, whether to release a touch of the touch input device, whether to move the touch input device, a position variation of the touch input device, a movement speed of the touch input device, a trace of a hovering movement, or the like. The touch gesture may include a touch, a multi-touch, a tap, a double tap, a long tap, a drag, a flick, a press, a pinch in, a pinch out, and the like.

The AP 162 may receive a key event from the key input unit 120 and perform a function corresponding to the key event.

The AP 162 may execute various types of programs stored in the memory 150. That is, the AP 162 may load various types of programs to the main memory from the secondary memory and execute the programs as processes. Particularly, the AP 162 may execute the display control module 151 as a process.

Meanwhile, the controller 160 may further include various processors other than the AP 162. For example, the controller 160 may include a Graphic Processing Unit (GPU) which performs a graphic process. When the electronic device 100 includes a mobile communication module (for example, a 3G mobile communication module, a 3.5G mobile communication module, a 4G mobile communication module or the like), the controller 160 may further include a Communication Processor (CP) which performs a process of the mobile communication. In the processors as described above, two or more independent cores (e.g., quad-core) may be integrated into one package configured as a single integrated circuit. For example, the AP 162 may be integrated into one multi-core processor. Further, the processors may be integrated into a System on Chip (SoC). Also, the processors may be packaged by a multi-layer.

Meanwhile, the electronic device 100 may further include components, such as a Global Positioning System (GPS) reception module, a vibration motor, a camera, an acceleration sensor, a gyro sensor, a proximity sensor, or the like, which are not described above. For example, when the electronic device 100 is configured to be in an automatic rotation mode, the controller 160 may analyze detection information collected from sensors to calculate a posture of the electronic device 100 and determine a display mode as one of a landscape mode and a portrait mode by using the calculated value. Of course, the display mode may be set as one of the two modes regardless of the posture of the electronic device 100. Between two sides of a screen perpendicular to each other, the longer side may be referred to as a horizontal side and the shorter side may be referred to as a vertical side. When the display mode is the landscape mode, a width of the screen may be in a horizontal direction and contents may be displayed in a vertical direction of the screen. When the display mode is the portrait mode, a width of the screen may be in a vertical direction and contents may be displayed in a horizontal direction of the screen.

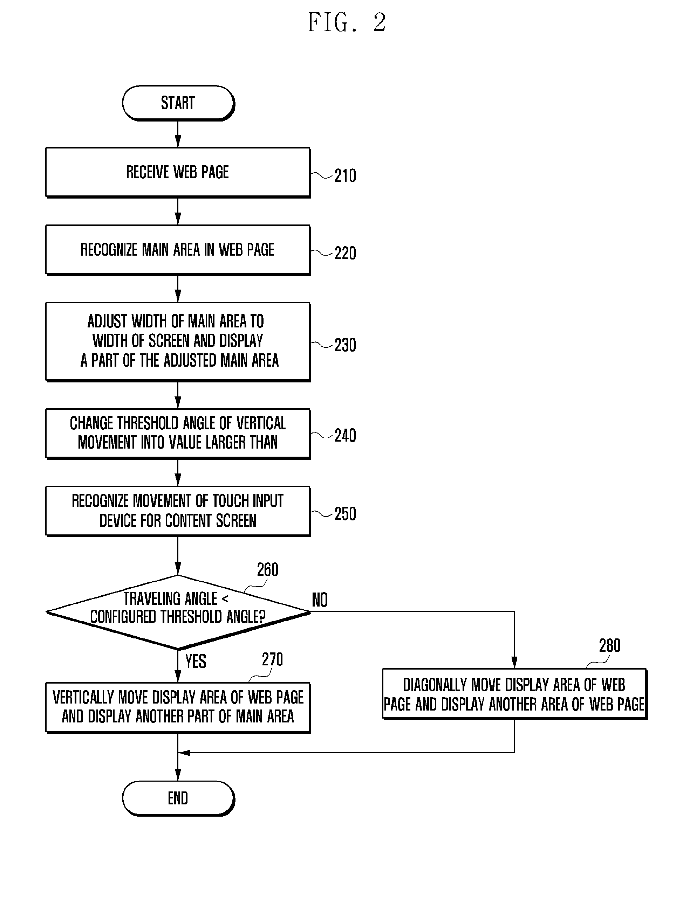

FIG. 2 is a flow chart illustrating an example of a process of displaying a web page according to an embodiment of the present disclosure.

Referring to FIG. 2, a controller 160 may receive a web page through a wireless communication unit 130 in operation 210. The controller 160 may recognize a main area in the received web page in operation 220. The controller 160 may adjust a width of the main area to a width of the screen and control a display unit 110 to cause a part of the adjusted main area to be displayed on a content screen in operation 230. The controller 160 may enlarge or reduce a corresponding content in order that the width of the main area is equal to the width of the content screen.

The controller 160 may change a vertical movement condition in operation 240. For example, the controller 160 may change a threshold angle of a vertical movement (e.g., movement in a direction which is perpendicular to a width) into a value larger than a pre-configured value. The controller 160 may recognize a movement of the touch input device (e.g., a finger or a pen) for a screen through an analysis of detection information received from the touch panel 111 in operation 250. The controller 160 may compare a movement trace with a condition configured in response to the movement of the touch input device in operation 260. For example, the controller 160 may calculate an angle of the movement trace (e.g., a traveling angle) and compare the calculated value (angle) with the threshold angle configured in operation 240. Herein, when a width of the screen is the x axis, the traveling angle may refer to an angle between the y axis and a distance by which the touch input device has moved.

When a value (e.g., the traveling angle) calculated in operation 260 meets the condition configured in operation 240 (e.g., when the value is smaller than a threshold angle), the controller 160 may control the display unit 110 to display another part of the main area by vertically moving a display area of a web page in operation 270. That is, when a user moves the touch input device in an upward direction (e.g., positive Y axis direction) while satisfying the vertical movement condition (e.g., within the threshold angle), the display area of the web page may vertically move upwards. When the user moves the touch input device in a downward direction (e.g., negative Y axis direction) while meeting the vertical movement condition (e.g., within the threshold angle), the display area of the web page may move downwards.

When a value (e.g., traveling angle) calculated in operation 260 does not meet a configured condition in operation 240 (e.g., when the value is equal to or greater than a threshold angle), the controller 160 may control the display unit 110 to display another area of the web page by diagonally moving a display area of the web page according to a moving direction of the touch input device in operation 280.

The processor as described above may display a main area of a web page to entirely fill the screen. Accordingly, there is no need to perform an additional operation (e.g., web page enlargement) in order to see only the main area so that the user can feel convenience. Further, when the main area has been displayed according to the width of the screen, the condition of the vertical movement may be automatically changed (e.g., the threshold angle is largely changed). Therefore, a case in which the display area of the web page moves in a direction (e.g., a slanted direction) which is different from a user's intention may be reduced.

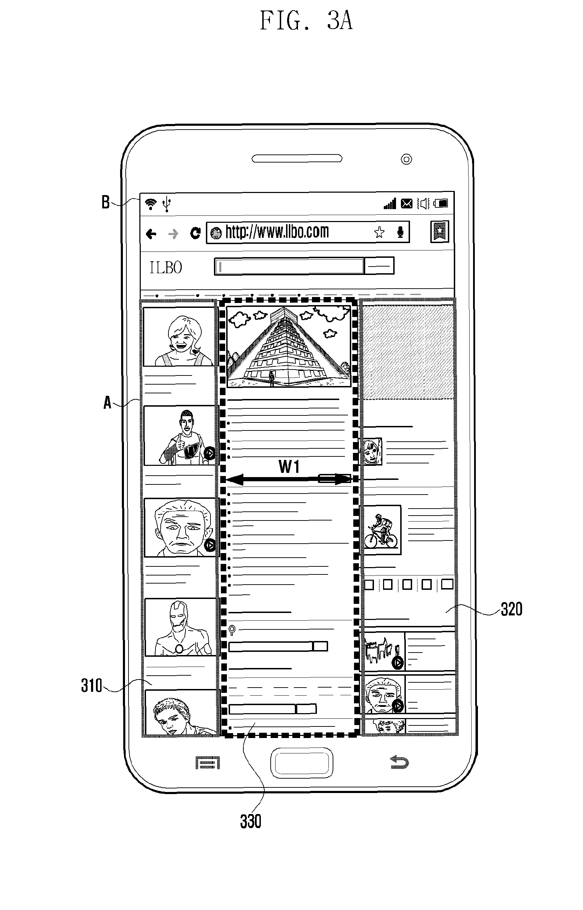

FIG. 3A is a screen of an electronic device when the process of FIG. 2 has not been executed according to an embodiment of the present disclosure.

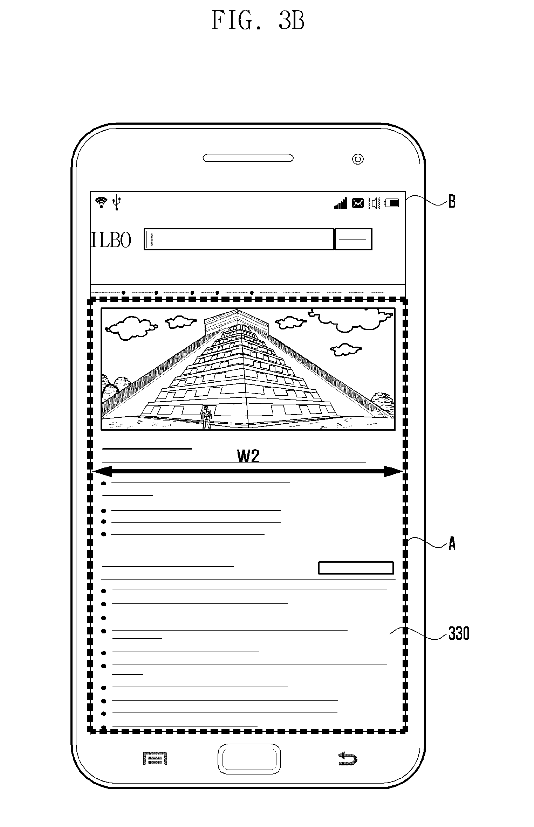

FIG. 3B is a screen of an electronic device when the process of FIG. 2 has been executed according to an embodiment of the present disclosure.

Referring to FIG. 3A, when the process of FIG. 2 has not been executed, a display unit 110 displays areas included in a web page, that is, additional areas 310 and 320 and a main area 330 having a width W1 on a content screen A. A reference number B refers to an indicator screen.

Referring to FIG. 3B, when the process of FIG. 2 has been executed, a display unit 110 displays a part of a main area 330 on a content screen A by adjusting a width W1 of the main area 330 (with reference to FIG. 3A) to a width W2 of the content screen A. In this event, a controller 160 may enlarge a web page in order to adjust the width W1 of the main area 330 to the width W2 of the content screen A. In addition, the controller 160 may extract the main area 330 in the web page and enlarge the main area 330 by the width W2. Again, reference number B refers to an indicator screen.

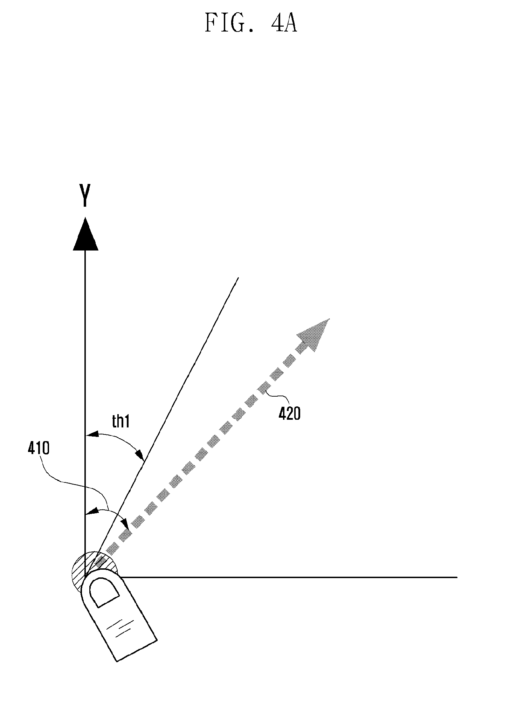

FIG. 4A is an embodiment of a vertical moving condition (e.g., threshold angle) configured when the process of FIG. 2 has not been executed according to an embodiment of the present disclosure.

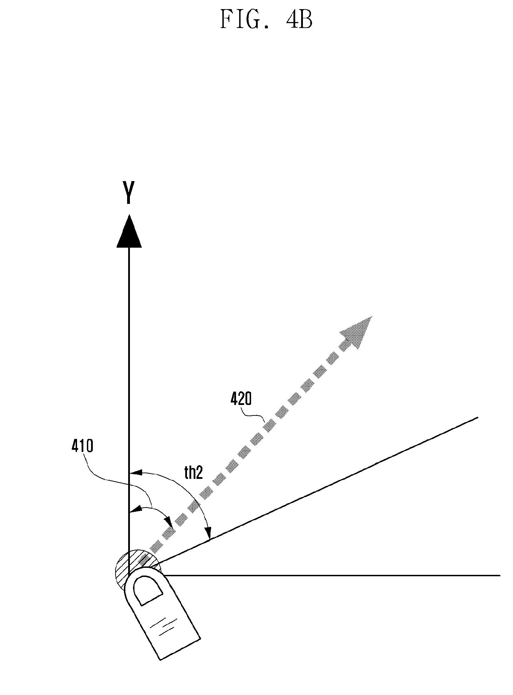

FIG. 4B is an embodiment of a vertical moving condition (e.g., threshold angle) configured when the process of FIG. 2 has been executed according to an embodiment of the present disclosure.

Referring to FIG. 4A, when the process of FIG. 2 has been not executed, a threshold angle of a vertical movement may be configured as th1. In a content screen, when a movement direction of a finger is indicated by a reference number 420 and a traveling angle is indicated by a reference number 410, the traveling angle 410 is larger than th1. Therefore, a content displayed on the content screen diagonally moves according to the movement direction of the finger 420.

Referring to FIG. 4B, when the process of FIG. 2 has been executed, a threshold angle of a vertical movement may be configured as th2 which is larger than th1. In a state as described above, when a movement direction of a finger is indicated by a reference number 420 and a traveling angle is indicated by a reference number 410 in the content screen, the traveling angle 410 is smaller than th2. Therefore, a content displayed on the content screen vertically moves in a Y axis direction. Meanwhile, when a display of a corresponding web page is terminated, a threshold angle changed as th2 may return to a previous value, that is, th1. When a display of a web page is terminated, a controller 160 changes a threshold angle to the previous value th1.

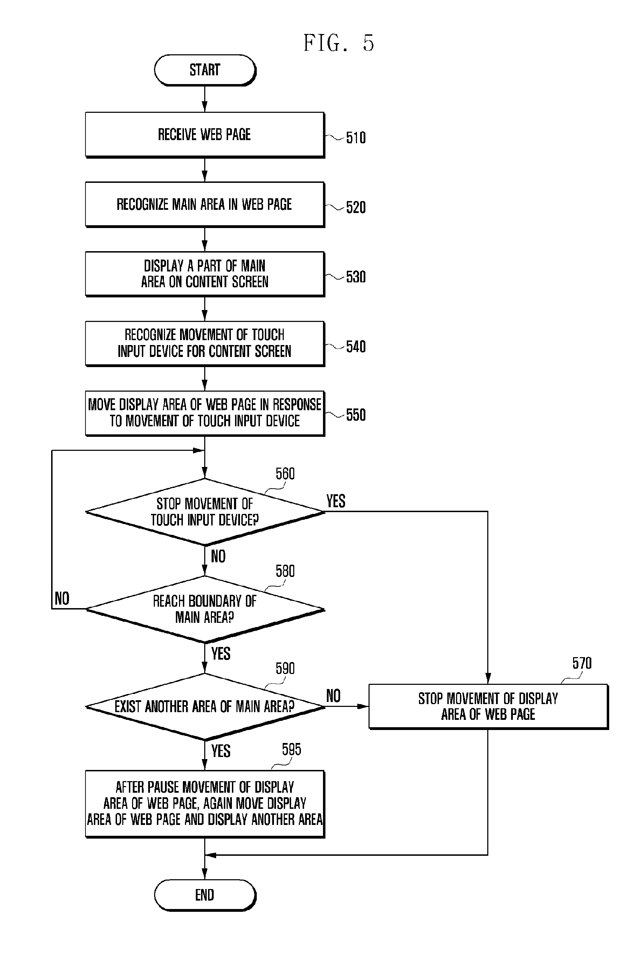

FIG. 5 is a flow chart illustrating an example of a process displaying a web page according to an embodiment of the present disclosure.

Referring to FIG. 5, a controller 160 may receive a web page through a wireless communication unit 130 in operation 510. The controller 160 may recognize a main area in the received web page in operation 520. The controller 160 may display a part of a main area on a content screen in operation 530. In this event, the controller 160 may enlarge a web page in order to fully display a part of the main area on the content screen. The controller 160 may recognize a movement of a touch input device for the content screen through an analysis of detection information received from a touch panel 111 in operation 540. The controller 160 may move a display area of the web page in response to the movement of the touch input device in operation 550. The controller 160 may determine whether a movement of a touch input device stops through an analysis of detection information received from the touch panel 111 in operation 560.

As a result of the determination in operation 560, when the movement of the touch input device stops, the controller 160 stops a movement of the display area of the web page in operation 570.

As a result of the determination in operation 560, when the movement of the touch input device does not stop, the controller 160 determines whether the boundary of the main area reaches the boundary of the content screen according to the movement of the display area of the web page in operation 580. As a result of the determination in operation 580, when the boundary of the main area does not reach the boundary of the content screen, a process may return to operation 560.

As a result of the determination in operation 580, when the boundary of the main area reaches the boundary of the content screen, the controller 160 determines whether another area exists beside the boundary of the main area in operation 590. As a result of the determination in operation 590, when another area does not exist beside the boundary of the main area, a process may return to operation 570.

As a result of the determination in operation 590, when another area exists beside the boundary of the main area, the controller 160 does not respond to the movement of the touch input device in operation 595. That is, in operation 595, the controller 160 may make the movement of the display area of the web page pause. As described above, when the display area of the web page does not move even though a user continuously moves a touch input device, the user may recognize that the touch input device reaches the boundary of the main area. Accordingly, the user can release a touch of the touch input device or stop a movement of the touch input device. Then, the user can move the touch input device in the direction of another area or move the touch input device in another direction. When the touch input device moves in the direction of another area, the controller 160 recognizes the movement and may control the display unit 110 to cause another area to be displayed by again moving the display area of the web page.

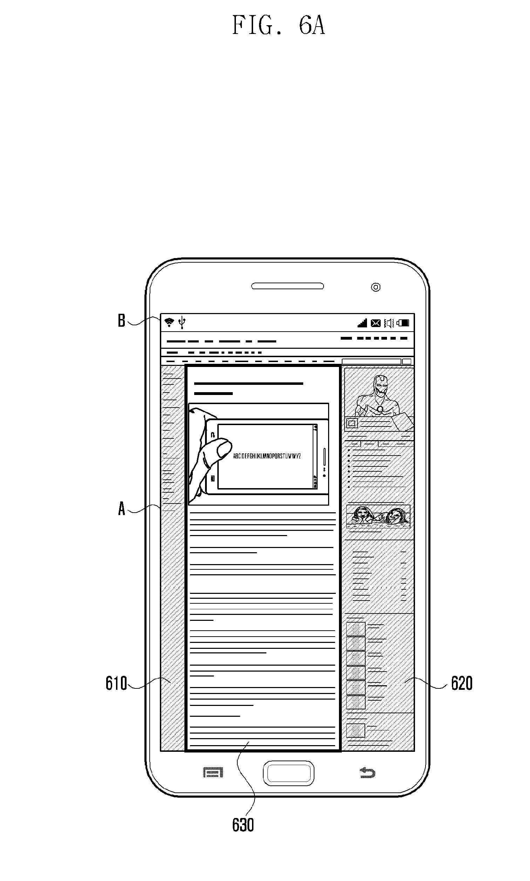

FIG. 6A is a screen of an electronic device when the process of FIG. 5 has been not executed according to an embodiment of the present disclosure.

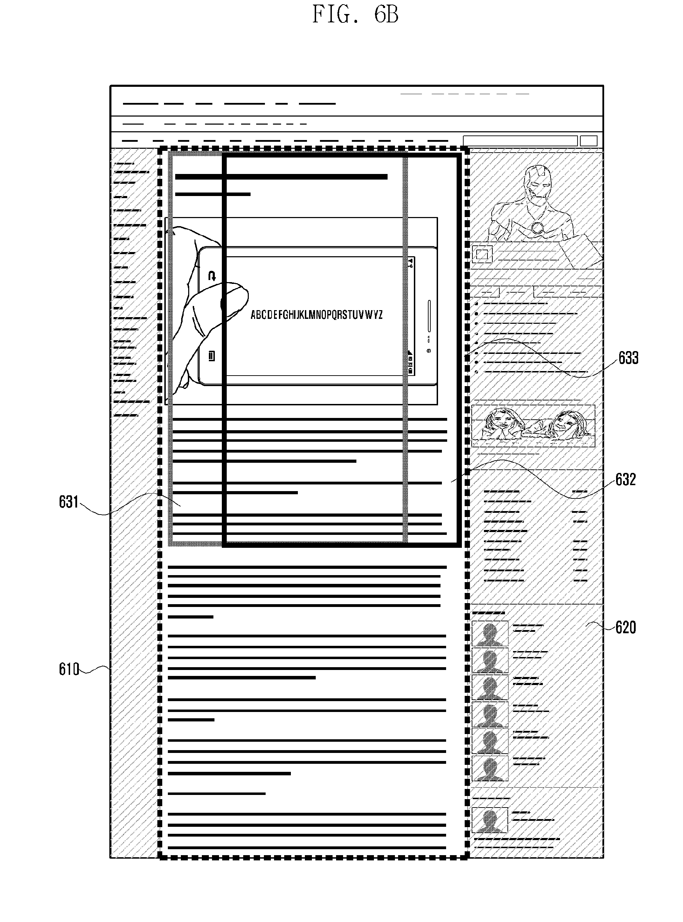

FIG. 6B is a web page enlarged according to an execution of the process of FIG. 5 according to an embodiment of the present disclosure.

Referring to FIG. 6A, when the process of FIG. 5 has not been executed, a display unit 110 displays all areas included in a web page, that is, additional areas 610 and 620 and a main area 630 on a content screen A. A reference number B refers to an indicator screen.

Referring to FIG. 6B, when the process of FIG. 5 has been executed, a controller 160 may enlarge a web page in order to cause an enlarged part 631 of a main area 630 to entirely fill a content screen A. Additional areas 610 and 620, another area 632 and boundary area 633 are also illustrated in FIG. 6B.

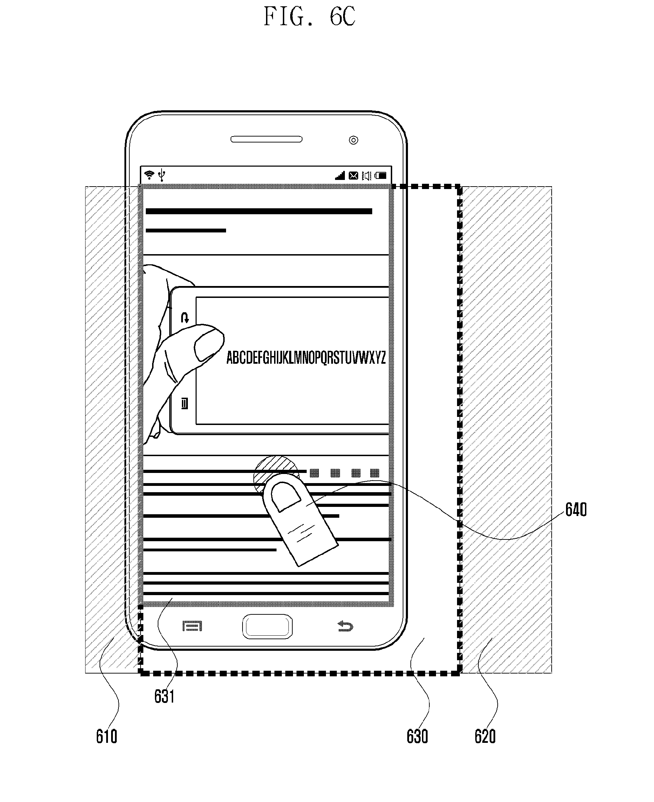

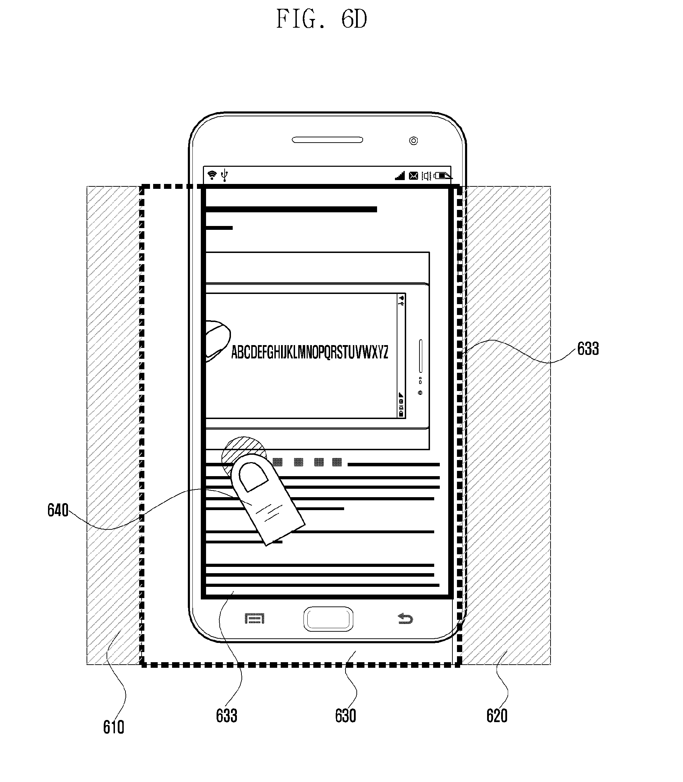

FIGS. 6C and 6D are screens of an electronic device when the process of FIG. 5 has been executed according to various embodiments of the present disclosure.

Referring to FIG. 6C, a display unit 110 may display an enlarged part 631 of a main area 630 to entirely fill a content screen A. Additional areas 610 and 620 and finger 640 are also illustrated in FIG. 6C.

Referring to FIG. 6D, a finger 640 moves from a left side to a right side on a content screen A so that a display unit 110 can display another part 632 of a main area 630 to entirely fill the content screen A. In this event, when a boundary 633 of the main area 630 reaches a boundary of the content screen A and the another area 632 exists beside the main area 630, a movement of the display area of the web page can stop. Additional areas 610 and 620 are also illustrated in FIG. 6D.

The method according to the present disclosure as described above may be implemented as a program command which can be executed through various computers and recorded in a computer-readable recording medium. Herein, the recording medium may include a program command, a data file, a data structure, or the like. The program command may be specially designed and configured for the present disclosure or may be used after being known to those skilled in computer software fields. The recording medium may include magnetic media such as a hard disk, a floppy disk and a magnetic tape, optical media such as a Compact Disc Read-Only Memory (CD-ROM) and a Digital Versatile Disc (DVD), magneto-optical media such as a floptical disk, and hardware devices such as a ROM, a RAM and a flash memory. Further, the program command may include a machine language code generated by a compiler and a high-level language code executable by a computer through an interpreter and the like.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for displaying an electronic document in an electronic device including a touch panel installed on a screen, the method comprising:
recognizing, by the electronic device, a main area in the electronic document;
adjusting a width of the main area to a width of an application execution screen for displaying the electronic document; and
displaying a part of the adjusted main area on the application execution screen.

2. The method of claim 1, further comprising:
changing a condition for a vertical movement of the electronic document when the part of the adjusted main area is displayed on the application execution screen.

3. The method of claim 2, further comprising:
recognizing a movement of a touch input device on the application execution screen;
calculating a moving trace in response to the recognized movement of the touch input device;
when the calculated moving trace satisfies the changed condition, vertically moving the electronic document and displaying another part of the main area; and
when the calculated moving trace does not satisfy the changed condition, diagonally moving the electronic document and displaying another area of the electronic document.

4. The method of claim 1, wherein the adjusting of the width of the main area to the width of the application execution screen further comprises enlarging or reducing the electronic document so that the width of the main area is equal to the width of the application execution screen.

5. The method of claim 1, wherein the electronic document is a web page or an e-book, and
the method further comprises receiving the electronic document from an external device.

6. The method of claim 1, wherein the application execution screen corresponds to a whole screen of the electronic device or a part of the screen of the electronic device.

7. A method for displaying an electronic document in an electronic device including a touch panel installed on a screen, the method comprising:
recognizing, by the electronic device, a main area in the electronic document;
displaying a part of the main area on the screen;
recognizing a movement command of the displayed part through a touch input on the screen;
moving the displayed part in response to the recognized movement command; and
when a boundary of the main area reaches a boundary of the screen according to the moving of the displayed part, stopping the moving of the displayed part.

8. The method of claim 7, wherein the displaying of the part of the main area on the screen further comprises enlarging the electronic document to cause the part of the main area to entirely fill the screen.

9. The method of claim 7, wherein the electronic document is a web page or an e-book, and
the method further comprises receiving the electronic document from an external device.

10. The method of claim 7, wherein the screen corresponds to a whole screen of the electronic device or a part of the screen of the electronic device.

11. An electronic device comprising:
a display unit including a touch panel installed on a screen;
a controller configured to control an operation of recognizing a main area in an electronic document, to control an operation of adjusting a width of the main area to a width of an application execution screen for displaying the electronic document, and to control an operation of controlling the display unit to cause a part of the adjusted main area to be displayed on the application execution screen; and
a memory configured to store the electronic document and a software module configured to perform the operation of the recognizing, the operation of the adjusting and the operation of the controlling.

12. The electronic device of claim 11, wherein, when the part of the adjusted main area is displayed on the application execution screen, the controller is further configured to control an operation of changing a condition for a vertical movement of the electronic document, to control an operation of recognizing a movement of a touch input device on the application execution screen, to control an operation of calculating a moving trace in response to the recognized movement of the touch input device, and to control an operation of vertically moving the electronic document and displaying another part of the main area when the calculated moving trace satisfies the changed condition.

13. The electronic device of claim 12, wherein, when the calculated moving trace does not satisfy the changed condition, the controller is further configured to control an operation of diagonally moving the electronic document and displaying another area of the electronic document.

14. The electronic device of claim 13, wherein the operation of the changing of the condition includes changing a threshold angle of movement of the input device into a value that is larger than a pre-configured value.

15. An electronic device comprising:
a display unit including a touch panel installed on a screen;
a controller configured to control an operation of recognizing a main area in an electronic document, to control an operation of controlling the display unit to cause a part of the main area to be displayed on the screen, to control an operation of recognizing a movement command of the displayed part through a touch input on the screen, to control an operation of moving the displayed part in response to the recognized movement command, and to control an operation of stopping the moving of the displayed part when a boundary of the main area reaches a boundary of the screen according to the moving of the displayed part; and
a memory that stores the electronic document and a software module configured to perform the operation of the recognizing of the main area, the operation of the controlling of the display unit, the operation of the recognizing of the movement command, the operation of the moving of the displayed part and the operation of the stopping.
